(19) Europäisches Patentamt
European Patent Office
Office européen des brevets

(11) EP 3 090 010 B1

(12) **EUROPEAN PATENT SPECIFICATION**

(45) Date of publication and mention of the grant of the patent:
**22.01.2020 Bulletin 2020/04**

(21) Application number: **14876316.2**

(22) Date of filing: **08.12.2014**

(51) Int Cl.:
***C08J 3/12*** *(2006.01)* ***C08L 71/12*** *(2006.01)*
***C08K 5/00*** *(2006.01)*

(86) International application number:
**PCT/US2014/069043**

(87) International publication number:
**WO 2015/102815 (09.07.2015 Gazette 2015/27)**

(54) **NON-DUSTING POLY(PHENYLENE ETHER) PARTICLES**

STAUBFREIE POLY(PHENYLENETHER)PARTIKEL

PARTICULES DE POLY(ÉTHER DE PHÉNYLÈNE) NE FORMANT PAS DE POUSSIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.01.2014 US 201414146952**

(43) Date of publication of application:
**09.11.2016 Bulletin 2016/45**

(73) Proprietor: **SABIC Global Technologies B.V.**
**4612 PX Bergen op Zoom (NL)**

(72) Inventors:
- **PETERS, Edward Norman**
  **Selkirk, New York 12158 (US)**
- **TARKIN-TAS, Eylem**
  **Selkirk, New York 12158 (US)**
- **LENZ, Douglas Henry**
  **Selkirk, New York 12158 (US)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**WO-A1-2007/050077**
**US-A1- 2005 049 362**
**US-A1- 2007 093 635**
**US-A1- 2011 160 421**
**US-A1- 2013 345 345**
**US-A1- 2014 005 340**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 090 010 B1

## Description

BACKGROUND OF THE INVENTION

Poly(phenylene ether)s are a class of plastics known for excellent water resistance, dimensional stability, dielectric properties, and inherent flame resistance. Properties such as strength, stiffness, chemical resistance, and heat resistance can be tailored by blending poly(phenylene ether)s with various other plastics and additives in order to meet the requirements of a wide variety of consumer products, for example, plumbing fixtures, electrical boxes, automotive parts, and insulation for wire and cable.

Micronized poly(phenylene ether) can be used as an organic filler for certain plastics As suggested in published U.S. patent applications US 2014/0005340 A1 and US 2014/0100312 A1, micronized poly(phenylene ether) can enhance the toughness, heat resistance, dielectric properties, water resistance, or flame retardance of epoxy resins, and polyurethane and polyisocyanurate foams. However, since the micronized poly(phenylene ether) comprises ultrafine particles, it can have a higher dusting tendency than existing grades of poly(phenylene ether).

In general, dust can pose a fire and deflagration hazard, and be harmful if inhaled. Dust conditions can be minimized by the installation of baghouses, dust collectors, and electrostatic precipitators. Yet despite such efforts to minimize dust, dust can still be a problem in certain manufacturing operations. In particular, in the manufacture of thermoplastic compositions such as molding compositions, dust can collect and build in the vicinity of an extruder feedthroat. A portion of airborne dust may eventually be exhausted outside of manufacturing facilities by building ventilation. However the dust exhaust can pose environmental problems if not abated. Inadequate dust control can cause surge hopper fires. Also dusting can result in non-uniform blend feeding, or "woofing". Moreover, dusting results in loss of valuable material.

Various anti-dusting agents have been used to address the foregoing problems by reducing the dusting of particulate solids. However none are known for micronized poly(phenylene ether) in particular. Moreover, when a particulate solid is used as an additive in thermoplastic or thermoset compositions, any anti-dusting agent present remains as a contaminant in the composition, and can adversely affect its physical properties. Thus there remains a need for anti-dusting agents that are effective for micronized poly(phenylene ether) and that do not contaminate materials that the micronized poly(phenylene ether) is used in.

BRIEF DESCRIPTION OF THE INVENTION

The invention relates to non-dusting poly(phenylene ether) particles comprising 80 to 96 weight percent of poly(phenylene ether) particles having a mean particle size of 1 to 40 micrometers; and 4 to 20 weight percent of a liquid reactive diluent; wherein all amounts are based on the combined weight of the poly(phenylene ether) particles and the liquid reactive diluent; and wherein poly(alkenyl aromatic) resins, rubber-modified poly(alkenyl aromatic) resins, and hydrogenated, partially hydrogenated, and non-hydrogenated block copolymers of an alkenyl aromatic monomer and a conjugated diene are all excluded from the non-dusting poly(phenylene ether) particles.

Other embodiments are a composition comprising the non-dusting poly(phenylene ether) particles and a second polyol, wherein the liquid reactive diluent comprises a first polyol having at least 2 hydroxyl groups per molecule; a composition comprising the non-dusting poly(phenylene ether) particles and a second epoxy resin, wherein the liquid reactive diluent comprises a first epoxy resin; and a composition comprising the non-dusting poly(phenylene ether) particles and a second ethylenically unsaturated monomer, wherein the reactive diluent comprises a first ethylenically unsaturated monomer.

Other embodiments are a composition comprising the non-dusting poly(phenylene ether) particles and a polyurethane or polyisocyanurate, wherein the liquid reactive diluent comprises a first polyol having at least 2 hydroxyl groups per molecule; a composition comprising the poly(phenylene ether) particles and a cured epoxy resin, wherein the liquid reactive diluent comprises a first epoxy resin; and a cured composition comprising the non-dusting poly(phenylene ether) particles and a thermoset resin, wherein the liquid reactive diluent comprises a first ethylenically unsaturated monomer, and the thermoset resin comprises a second ethylenically unsaturated monomer.

A method of preventing the dusting of poly(phenylene ether) particles having a particle size of 1 to 40 micrometers, comprises combining the poly(phenylene ether) particles and an amount of liquid reactive diluent sufficient to provide non-dusting poly(phenylene ether) particles, wherein 80 to 96 weight percent of the poly(phenylene ether) particles are combined with 4 to 20 weight percent of liquid reactive diluent, based on the total weight of the non-dusting poly(phenylene ether) particles.

These and other embodiments are described in detail below.

DETAILED DESCRIPTION OF THE INVENTION

The present inventors have found liquid reactive diluents that provide non-dusting poly(phenylene ether) particles when combined with poly(phenylene ether) having a particle size of 1 to 40 micrometers. The non-dusting poly(phenylene ether) particles can significantly reduce any fire, deflagration, or health hazards of micronized poly(phenylene ether), and prevent non-uniform blend feeding and material loss.

The non-dusting poly(phenylene ether) particles comprise 80 to 96 weight percent of poly(phenylene ether) particles having a mean particle size of 1 to 40 micrometers; and 4 to 20 weight percent of a liquid reactive diluent; wherein all amounts are based on the total weight of the poly(phenylene ether) and the liquid reactive diluent; and wherein alkenyl aromatic resins, rubber-modified alkenyl aromatic resins, and hydrogenated and non-hydrogenated block copolymers of an alkenyl aromatic monomer and a conjugated diene are all excluded from the non-dusting poly(phenylene ether) particles.

As used herein, "non-dusting" refers to poly(phenylene ether) particles that do not produce a dust cloud upon pouring. In particular, the extent of dusting is determined by pouring 150 grams of the non-dusting poly(phenylene ether) particles into a 1-liter jar as described in the Examples section herein. The poly(phenylene ether) particles can be described as non-dusting when no dust cloud is produced in this test.

The poly(phenylene ether)comprises repeating structural units having the structure:

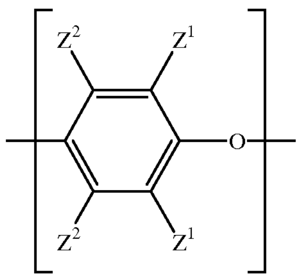

wherein each occurrence of $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each occurrence of $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is specifically described as substituted, it can contain heteroatoms other than the carbon and hydrogen members of the substituent residue. Thus, when described as substituted, the hydrocarbyl residue contains one or more heteroatoms such as a halogen, oxygen, nitrogen, sulfur, phosphorus, or silicon. When specifically described as substituted, the hydrocarbyl residue can also contain one or more carbonyl groups, amino groups, hydroxyl groups, or the like, or it can contain heteroatoms within the backbone of the hydrocarbyl residue. As one example, $Z^1$ can be a di-n-butylaminomethyl group formed by reaction of a 3,5-dimethyl-1,4-phenyl group with the di-n-butylamine component of an oxidative polymerization catalyst. As another example, $Z^1$ can be a morpholinomethyl group formed by reaction of a 3,5-dimethyl-1,4-phenyl group with the morpholine component of an oxidative polymerization catalyst.

The poly(phenylene ether) can be a homopolymer, a copolymer, a graft copolymer, an ionomer, a block copolymer, or a combination thereof. The poly(phenylene ether) can comprise, for example 2,6-dimethyl-1,4-phenylene ether repeating units, 2,3,6-trimethyl-1,4-phenylene ether repeating units, or a combination thereof. The poly(phenylene ether) can be monofunctional or bifunctional. The poly(phenylene ether) can be monofunctional. For example, it can have a functional group at one terminus of the polymer chains. The functional group can be, for example, a hydroxyl group or a (meth)acrylate group.

The poly(phenylene ether) can be prepared by the oxidative coupling of monohydroxyaromatic compound(s) such as 2,6-xylenol and/or 2,3,6-trimethylphenol. Catalyst systems are generally employed for such coupling. They can contain heavy metal compounds such as copper, manganese, or cobalt compounds, usually in combination with one or more ligands such as a primary amine, a secondary amine, a tertiary amine, a halide, or a combination thereof.

The poly(phenylene ether) can comprise poly(phenylene ether) rearrangement products, such as bridging products and branching products. For example, poly(2,6-dimethyl-1,4-phenylene ether) can comprise the bridging frag-

ment below:

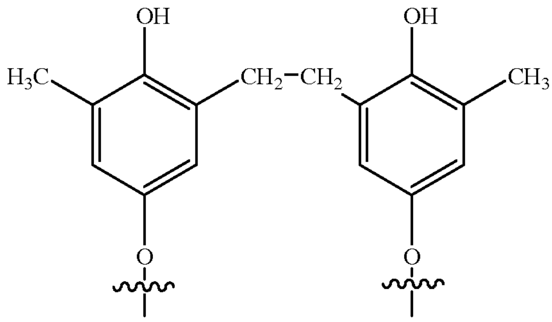

.

This branching fragment is referred to herein as an "ethylene bridge group". As another example, poly(2,6-dimethyl-1,4-phenylene ether) can comprise the branching fragment below:

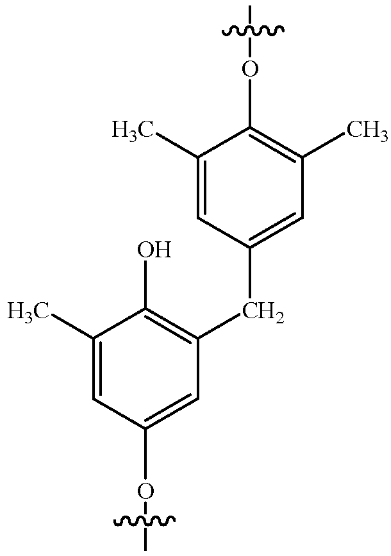

.

This bridging fragment is referred to herein as a "rearranged backbone group". These fragments can be identified and quantified by $^{31}P$ nuclear magnetic resonance spectroscopy.

The poly(phenylene ether) can be essentially free of incorporated diphenoquinone residues. In the context, "essentially free" means that the fewer than 1 weight percent of poly(phenylene ether) molecules comprise the residue of a diphenoquinone. As described in U.S. Patent No. 3,306,874 to Hay, synthesis of poly(phenylene ether) by oxidative polymerization of monohydric phenol yields not only the desired poly(phenylene ether) but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(phenylene ether) (i.e., the diphenoquinone is incorporated into the poly(phenylene ether) chain) by heating the polymerization reaction mixture to yield a poly(phenylene ether) comprising terminal or internal diphenoquinone residues. For example, as shown in the Scheme below, when a poly(phenylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(phenylene ether) with terminal and internal residues of diphenoquinone.

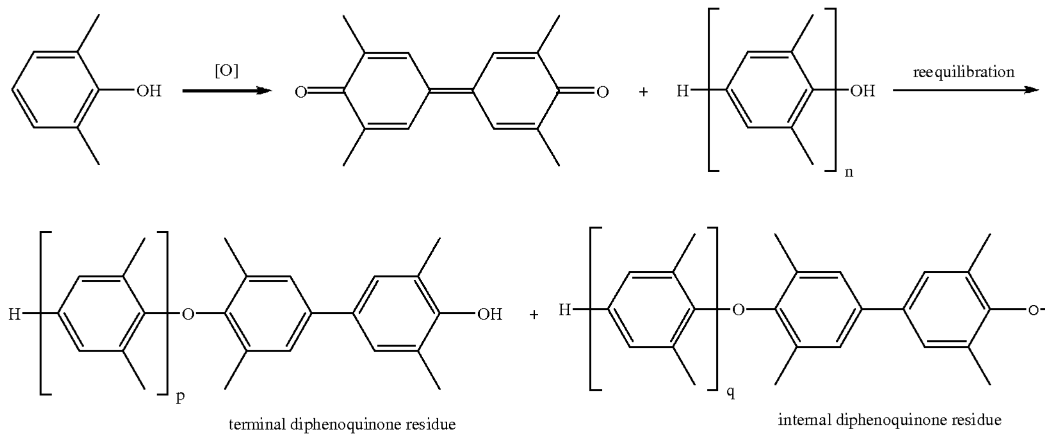


Scheme

However, such reequilibration reduces the molecular weight of the poly(phenylene ether) (e.g., p and q+r are less than n). Accordingly, when a higher molecular weight poly(phenylene ether) is desired, it may be desirable to separate the diphenoquinone from the poly(phenylene ether) rather than reequilibrating the diphenoquinone into the poly(phenylene ether) chains. Such a separation can be achieved, for example, by precipitation of the poly(phenylene ether) in a solvent or solvent mixture in which the poly(phenylene ether) is insoluble and the diphenoquinone is soluble. For example, when a poly(phenylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with about 1 to about 4 volumes of methanol or a methanol/water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the reequilibration of the diphenoquinone into the poly(phenylene ether) chain can be minimized (e.g., by isolating the poly(phenylene ether) no more than 200 minutes after termination of oxidative polymerization). In an alternative approach utilizing the temperature-dependent solubility of diphenoquinone in toluene, a toluene solution containing diphenoquinone and poly(phenylene ether) can be adjusted to a temperature of about 25 °C, at which diphenoquinone is poorly soluble but the poly(phenylene ether) is soluble, and the insoluble diphenoquinone can be removed by solid-liquid separation (e.g., filtration).

The poly(phenylene ether) can comprise 2,6-dimethyl-1,4-phenylene ether units, 2,3,6-trimethyl-1,4-phenylene ether units, or a combination thereof. In some embodiments, the poly(phenylene ether) comprises poly(2,6-dimethyl-1,4-phenylene ether). An example of a poly(2,6-dimethyl-1,4-phenylene ether) is PPO™ 640, available from SABIC Innovative Plastics.

The poly(2,6-dimethyl-1,4-phenylene ether) can have an intrinsic viscosity of 0.3 to 1.5 deciliter per gram, specifically 0.3 to 0.6 deciliters per gram, and more specifically 0.3 to 0.5 deciliters per gram, as measured in chloroform at 25 °C. For poly(2,6-dimethyl-1,4-phenylene ether), an intrinsic viscosity of 0.3 to 0.6 deciliters per gram corresponds to a number average molecular weight range of 16,000 to 25,000 atomic mass units. In specific embodiments, the poly(phenylene ether) comprises poly(2,6-dimethyl-1,4-phenylene ether) having an intrinsic viscosity of 0.46 deciliters per gram, 0.4 deciliters per gram, or 0.3 deciliters per gram.

Poly(phenylene ether) particles can be obtained according to methods readily available to the skilled artisan, for example by jet milling, ball milling, pulverizing, air milling, or grinding commercial grade poly(phenylene ether). "Classification" is defined as the sorting of a distribution of particles to achieve a desired degree of particle size uniformity. A classifier is often used together with milling for the continuous extraction of fine particles from the material being milled. The classifier can be, for example, a screen of certain mesh size on the walls of the grinding chamber. Once the milled particles reach sizes small enough to pass through the screen, they are removed. Larger particles retained by the screen remain in the milling chamber for additional milling and size reduction.

Air classification is another method of removing the finer particles from milling. Air classifiers include static classifiers (cyclones), dynamic classifiers (single-stage, multi-stage), cross-flow classifiers, and counter-flow classifiers (elutriators). In general, a flow of air is used to convey the particles from the mill to the classifier, where the fine particles are further conveyed to a collector. The course particles, being too heavy to be carried by the air stream, are returned to the mill for further milling and size reduction. In larger operations, air classification is more efficient, while in smaller operations a screen can be used.

The poly(phenylene ether) particles can have a mean particle size (volume distribution) of 0.01 to 100 micrometers, as determined by dynamic image analysis. Within this range, the poly(phenylene ether) particles can have a mean

particle size of 1 to 100 micrometers, specifically 1 to 40 micrometers, more specifically 1 to 30 micrometers, still more specifically 1 to 15 micrometers, and yet more specifically 1 to 10 micrometers. In some embodiments, the poly(phenylene ether) particles have a mean particle size of 1 to 40 micrometers.

Ninety percent of the particle volume distribution of the poly(phenylene ether) particles can be less than 30 micrometers, less than 20 micrometers, or less than 10 micrometers. In some embodiments, 90 percent of the particle volume distribution of the poly(phenylene ether) particles is less than 10 micrometers. Fifty percent of the particle volume distribution of the poly(phenylene ether) particles can be less than 20 micrometers, less than 15 micrometers, or less than 10 micrometers. Ten percent of the particle volume distribution of the poly(phenylene ether) particles can be less than 10 micrometers, less than 7 micrometers, or less than 5 micrometers.

The composition comprises 80 to 96 weight percent, specifically 82 to 94 weight percent, more specifically 85 to 94 weight percent, still more specifically 88 to 94 weight percent, and yet more specifically 90 to 94 weight percent of the poly(phenylene ether) particles, based on the combined weight of the poly(phenylene ether) particles and the liquid reactive diluent.

Poly(alkenyl aromatic) resins, rubber-modified poly(alkenyl aromatic resins), and hydrogenated, partially hydrogenated, and non-hydrogenated block copolymers of an alkenyl aromatic monomer and a conjugated diene are all excluded from the non-dusting poly(phenylene ether) particles. As used herein, the term, "excluded" means that the excluded component is not added to, and is therefore absent from, the non-dusting poly(phenylene ether) particles.

Alkenyl aromatic resins are excluded from the non-dusting poly(phenylene ether) particles. The alkenyl aromatic monomer used to prepare the poly(alkenyl aromatic) resin can have the structure:

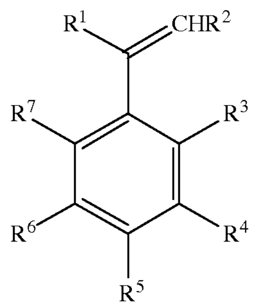

wherein $R^1$ and $R^2$ each independently represent a hydrogen atom, a $C_1$-$C_8$ alkyl group, or a $C_2$-$C_8$ alkenyl group; $R^3$ and $R^7$ each independently represent a hydrogen atom, a $C_1$-$C_8$ alkyl group, a chlorine atom, or a bromine atom; and $R^4$, $R^5$, and $R^6$ each independently represent a hydrogen atom, a $C_1$-$C_8$ alkyl group, or a $C_2$-$C_8$ alkenyl group, or $R^4$ and $R^5$ are taken together with the central aromatic ring to form a naphthyl group, or $R^5$ and $R^6$ are taken together with the central aromatic ring to form a naphthyl group. Specific alkenyl aromatic monomers include, for example, styrene, chlorostyrenes such as p-chlorostyrene, and methylstyrenes such as alpha-methylstyrene and p-methylstyrene, and combinations thereof.

In some embodiments, the alkenyl aromatic monomer is styrene, and the poly(alkenyl aromatic) resin is polystyrene. Polystyrene refers to a homopolymer of styrene. Thus, the residue of any monomer other than styrene is excluded from polystyrene. The polystyrene can be atactic, syndiotactic, or isotactic. The polystyrene can have a number average molecular weight of 10,000 to 200,000 atomic mass units, specifically 30,000 to 100,000 atomic mass units. In some embodiments, the polystyrene consists of atactic polystyrene. The atactic homopolystyrene can have a melt flow index of 0.5 to 10 grams per 10 minutes, specifically 1 to 5 grams per 10 minutes, measured at 200 °C and 5 kilogram load according to ASTM D1238. The atactic homopolystyrene can have a mineral oil content of less than or equal to 5 weight percent, specifically less than or equal to 2 weight percent. In a particular embodiment, the alkenyl aromatic is an atactic homopolystyrene having a number average molecular weight of 30,000 to 100,000 atomic mass units.

Rubber-modified poly(alkenyl aromatic) resins are excluded from the non-dusting poly(phenylene ether) particles. "Rubber-modified poly(alkenyl aromatic) resin" refers to a poly(alkenyl aromatic) resin that has been toughened to improve impact resistance by polymerizing a conjugated diene before or after polymerization of the alkenyl aromatic monomer. The resulting rubber-modified poly(alkenyl aromatic) resin is a graft interpolymer of the poly(alkenyl aromatic) resin and the poly(conjugated diene). The alkenyl aromatic monomer used to prepare the rubber-modified poly(alkenyl aromatic) resin is described above. The conjugated diene used to prepare the rubber-modified poly(alkenyl aromatic) can be a $C_4$-$C_{20}$ conjugated diene. Specific conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and a combination thereof. The conjugated diene can be 1,3-butadiene, 2-methyl-1,3-butadiene, or a combination thereof, specifically 1,3-butadiene.

The rubber-modified poly(alkenyl aromatic) can comprise polystyrene and polybutadiene. Rubber-modified polystyrenes are sometimes referred to as "high-impact polystyrenes" or "HIPS". The rubber-modified polystyrene can

comprises 80 to 96 weight percent polystyrene, specifically 88 to 94 weight percent polystyrene; and 4 to 20 weight percent polybutadiene, specifically 6 to 12 weight percent polybutadiene, based on the weight of the rubber-modified polystyrene. The rubber-modified polystyrene can have an effective gel content of 10 to 35 percent. An example of a rubber-modified polystyrene is GEH HIPS 1897, obtained from SABIC Innovative Plastics.

Hydrogenated, partially hydrogenated or non-hydrogenated block copolymers of an alkenyl aromatic monomer and a conjugated diene, are excluded form the poly(phenylene ether) particles. For brevity, these copolymers are herein referred to collectively as "block copolymers". The alkenyl aromatic monomer and conjugated diene use to prepare the block copolymer are described above.

The block copolymer is a copolymer comprising at least one block derived from an alkenyl aromatic monomer (A) and at least one block derived from a conjugated diene (B). The arrangement of blocks (A) and (B) includes a linear structure, a grafted structure, and a radial teleblock structure with or without a branched chain. Linear block copolymers include tapered linear structures and non-tapered linear structures. The block copolymer can have a tapered linear structure or a non-tapered linear structure. The hydrogenated block copolymer can comprise a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In some embodiments, the block copolymer comprises a diblock copolymer, a triblock copolymer, or a combination thereof.

The block copolymer can exclude residues of monomers other than the alkenyl aromatic monomer and the conjugated diene. Thus, the block copolymer can consist of blocks derived from the alkenyl aromatic monomer and blocks derived from the conjugated diene. In some embodiments, the block copolymer does not comprise grafts formed from these or any other monomers. The block copolymer can consist of carbon and hydrogen atoms and therefore excludes heteroatoms. The block copolymer can include the residues of one or more acid functionalizing agents, such as maleic anhydride. Methods for preparing block copolymers are known in the art and many block copolymers are commercially available.

The aliphatic unsaturated group content in the block (B) can be hydrogenated, partially hydrogenated, or non-hydrogenated. The hydrogenated block copolymers have better ultraviolet (UV) stability than non-hydrogenated block copolymers. Thus, it can be advantageous to use hydrogenated block copolymers in parts that are exposed to sunlight. The hydrogenated and partially hydrogenated block copolymers can comprise aliphatic unsaturation in the (B) block that is reduced by at least 50 percent, specifically at least 70 percent, more specifically at least 80 percent, still more specifically at least 90 percent, and yet more specifically at least 95 percent, compared to the same block copolymer that is non-hydrogenated.

Illustrative commercially available hydrogenated block copolymers include the polystyrene-poly(ethylene-propylene) diblock copolymers available from Kraton Polymers as KRATON™ G1701 (having 37 weight percent polystyrene) and G1702 (having 28 weight percent polystyrene); the polystyrene-poly(ethylene-butylene)-polystyrene (SEBS) triblock copolymers available from Kraton Polymers as KRATON™ G1641 (having 34 weight percent polystyrene), G1651 (having 31-33 weight percent polystyrene), and G1654 (having 31 weight percent polystyrene); and the polystyrene-poly(ethylene-ethylene/propylene)-polystyrene triblock copolymers available from Kuraray as SEPTON™ S4044, S4055, S4077, and S4099. Additional commercially available hydrogenated block copolymers include polystyrene-poly(ethylene-butylene)-polystyrene (SEBS) triblock copolymers available from Dynasol as CALPRENE™ CH-6170, CH-7171, CH-6174 and CH-6140; from Kuraray as SEPTON™ 8006 and 8007; and from Asahi as TUFTEC™ H1051; polystyrene-poly(ethylenepropylene)-polystyrene (SEPS) copolymers available from Kuraray as SEPTON™ 2006 and 2007; and oil-extended compounds of these hydrogenated block copolymers available from Kraton Polymers as KRATON™ G4609 and G4610 and from Asahi as TUFTEC™ H1272. Mixtures of two of more hydrogenated block copolymers can be used.

The styrenic copolymer can also be a non-hydrogenated block copolymer. Non-hydrogenated block copolymers are similar to hydrogenated block copolymers, except the residual aliphatic unsaturation in the poly(conjugated diene) blocks is not reduced by hydrogenation. Specific non-hydrogenated block copolymers include polystyrene-polybutadiene-polystyrene triblock copolymers (SBS), polystyrene-polyisoprene-polystyrene triblock copolymers (SIS), polystyrene-polybutadiene diblock copolymers (SB), polystyrene-polyisoprene diblock copolymers (SI), and combinations thereof.

The non-dusting poly(phenylene ether) particles comprise a liquid reactive diluent. The term, "liquid", as used herein refers to a material that is a liquid at 23 °C and 1 atmosphere pressure. A liquid reactive diluent, is a liquid which when mixed with another liquid, reduces its viscosity, and is capable of reacting with cross-linking agents, for example polyisocyanates, epoxy resins, or multi-ethylenically unsaturated monomers, used in thermoset resin compositions. Liquid reactive diluents can have, for example, hydroxyl, epoxy, vinyl, or (meth)acrylate functionality.

In some embodiments, the liquid reactive diluent is selected from a first polyol having at least two hydroxyl groups per molecule, a first epoxy resin, a first ethylenically unsaturated monomer, a polyether-modified polysiloxane, and combinations thereof. In some embodiments, the liquid reactive diluent comprises a first polyol having at least two

hydroxyl groups per molecule. The term, "polyol", as used herein, refers to a compound, oligomer, or polymer having on average at least two hydroxyl groups per molecule. The polyol can have 2 to 10 hydroxyl groups per molecule, specifically 2 to 8 hydroxyl groups per molecule.

In some embodiments, the liquid reactive diluent comprises a polyether polyol prepared by reacting a monomeric polyol containing 2 to 8 hydroxyl groups per molecule with an alkoxylating agent selected from ethylene oxide, propylene oxide, 1,2-butylene oxide, and combinations thereof. The alkoxylated polyols can comprise ethoxylated saccharides, propoxylated saccharides, butoxylated saccharides, ethoxylated glycerins, propoxylated glycerins, butoxylated glycerins, ethoxylated diethanolamines, propoxylated diethanolamines, butoxylated diethanolamines, ethoxylated triethanolamines, propoxylated triethanolamines, butoxylated triethanolamines, ethoxylated trimethylolpropanes, propoxylated trimethylolpropanes, butoxylated trimethylolpropanes, ethoxylated erythritols, propoxylated erythritols, butoxylated erythritols, ethoxylated pentaerythritols, propoxylated pentaerythritols, butoxylated pentaerythritols, and combinations thereof. In some embodiments, the first polyol is selected from propoxylated saccharides, propoxylated glycerins, propoxylated diethanolamines, propoxylated triethanolamines, propoxylated trimethylolpropanes, propoxylated erythritols, propoxylated pentaerythritols, or combinations thereof. In some embodiments, the liquid reactive diluent comprises an ethylene oxide capped polyether triol having a hydroxyl equivalent weight of 100 to 3,000 grams per equivalent, specifically 200 to 2,000 grams per equivalent.

The first polyol can also comprise an aliphatic polyester polyol, an aromatic polyester polyol, for example a polyester polyol derived from ortho-terephthalic acid or terephthalic acid, an aromatic polyether polyol, an alkoxylated bisphenol, for example ethoxylated or propoxylated bisphenol A, an alkoxylated Mannich base polyol, for example the reaction product of phenol, formaldehyde, diethanolamine, and propylene oxide, or combinations thereof. In some embodiments, the polyol comprises a propoxylated sucrose, a propoxylated glycerin, an aromatic polyester polyol, or combinations thereof.

In some embodiments, the liquid reactive diluent comprises a first epoxy resin. In some embodiments, the first epoxy resin comprises a glycidyl ether group, which is a monovalent epoxide group having the structure:

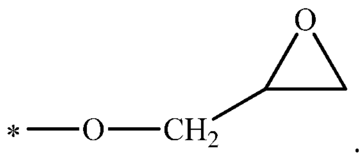

The liquid reactive diluent comprising a glycidyl ether group can be a mono- or multifunctional alkanol glycidyl ether. The alkanol glycidyl ethers can comprise diglycidyl ether of 1,4-butanediol diglycidyl ether, 1,6-hexanediol diglycidyl ether, neopentyl glycol diglycidyl ether, 2-ethylhexyl glycidyl ether, butyl glycidyl ether, phenyl glycidyl ether, t-butyl glycidyl ether, o-cresyl glycidyl ether, nonylphenyl glycidyl ether, p-tert-butylphenyl glycidyl ether, cyclohexanedimethanol diglycidyl ether, trimethylolpropane triglycidyl ether, trimethylolethane triglycidyl ether, $C_8$-$C_{10}$, $C_{12}$-$C_{14}$, and $C_{13}$-$C_{15}$ aliphatic glycidyl ethers, glycerine triglycidyl ether, pentaerythritol tetraglycidyl ether, sorbitol glycidyl ether, allyl glycidyl ether, or combinations thereof.

The first epoxy resin can comprise the reaction product of 2,2-bis(4-hydroxyphenyl)propane (Bisphenol A) and epichlorohydrin, which is also know as the diglycidyl ether of Bisphenol A (DGEBPA), and has the structure:

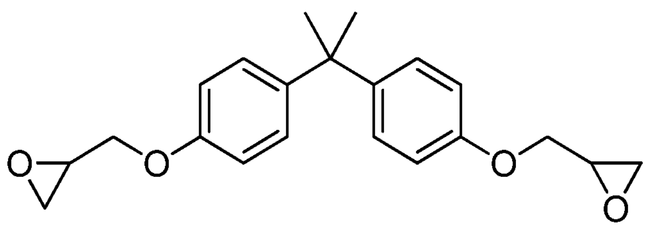

The first epoxy resin can also comprise a higher molecular weight homolog of DGEBPA, as represented by the structure:

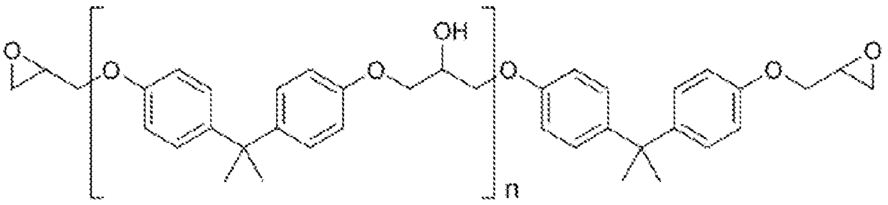

wherein n is greater than 0 to less than 2.5. At about 2.5, this epoxy resin becomes a low-melting solid. These epoxy resins can comprise D.E.R.™ 317, 330, 331, 332, 336, 337, 362, 364, 382, 383, or combinations thereof, available from Dow Plastics, and EPON™ 825, 826, 827, 828, 830, or combinations thereof, available from Hexion Specialty Chemicals. The DGEBA can have an epoxy equivalent weight of 100 to 500 grams per equivalent, specifically 150 to 250 grams per equivalent, and more specifically 175 to 190 grams per equivalent.

The first epoxy resin can also comprise the reaction product of 2,2-bis(4-hydroxyphenyl)methane, (Bisphenol F) and epichlorohydrin, which is also know as the diglycidyl ether of Bisphenol F (DGEBF). The DGEBF can comprise EPON™ 862, 863, or a combination thereof, available from Hexion Specialty Chemicals.

The first epoxy resin can also comprise an aliphatic diglycidyl ether of a polyglycol, for example propylene glycol diglycidyl ether, polyglycerin-3-glycidyl ether, epoxidized vegetable oil, for example, epoxidized soybean oil or epoxidized castor oil, epoxy bisphenol F novolac, epoxy polyacrylate, for example an epoxy diacrylate and epoxy triacrylate, hydrogenated bisphenol A diglycidyl ether, styrene oxide, and combinations thereof.

In some embodiments, the liquid reactive diluent comprises an epoxy resin selected from reaction products of bisphenol A and epichlorohydrin having an epoxy equivalent weight of 175 to 190 grams per equivalent, 1,4-butanediol diglycidyl ether, 2-ethylhexyl glycidyl ether, and combinations thereof.

In some embodiments, the liquid reactive diluent comprises a first ethylenically unsaturated monomer. The first ethylenically unsaturated monomer can comprise a mono-ethylenically unsaturated monomer, a multi-ethylenically unsaturated monomer, or a combination thereof. The term, "(meth)acrylate", as used herein, refers to acrylate or methacrylate, and the term, "di(meth)acryloyl", as used herein, refers to diacryloyl or dimethacryloyl. The first ethylenically unsaturated monomer can comprise a "macromonomer", i.e. an oligomer or polymer comprising an ethylenically unsaturated group. The ethylenically unsaturated monomer can comprise 1 or more ethylenically unsaturated groups, specifically 1 to 10 ethylenically unsaturated groups, more specifically 1 to 3 ethylenically unsaturated groups. The first ethylenically unsaturated monomer can comprise, for example, divinylbenzenes, diallylbenzenes, trivinylbenzenes, triallylbenzenes, divinyl phthalates, diallyl phthalates, triallyl mesate, triallyl mesitate, triallyl cyanurate, triallyl isocyanurate, trimethylolpropane tri(meth)acrylate, 1,6-hexanediol di(meth)acrylate, neopentyl glycol di(meth)acrylate, dipropylene glycol di(meth)acrylate, ethylene glycol di(meth)acrylate, propylene glycol di(meth)acrylate, cyclohexanedimethanol di(meth)acrylate, butanediol di(meth)acrylate, diethylene glycol di(meth)acrylate, triethylene glycol di(meth)acrylate, (ethoxylated)$_{2-40}$ 1,6-hexanediol di(meth)acrylates, (propoxylated)$_{2-40}$ 1,6-hexanediol di(meth)acrylates, (ethoxylated)$_{2-40}$ 1,4-butanediol di(meth)acrylates, (propoxylated)$_{2-40}$ 1,4-butanediol di(meth)acrylates, (ethoxylated)$_{2-40}$ 1,3-butanediol di(meth)acrylates, (propoxylated)$_{2-40}$ 1,3-butanediol di(meth)acrylates, (ethoxylated)$_{2-40}$ ethylene glycol di(meth)acrylates, (propoxylated)$_{2-40}$ ethylene glycol di(meth)acrylates, (ethoxylated)$_{2-40}$ propylene glycol di(meth)acrylates, (propoxylated)$_{2-40}$ propylene glycol di(meth)acrylates, (ethoxylated)$_{2-40}$ 1,4-cyclohexanedimethanol di(meth)acrylates, (propoxylated)$_{2-40}$ 1,4-cyclohexanedimethanol di(meth)acrylates, (ethoxylated)$_{2-40}$ bisphenol-A di(meth)acrylates, (propoxylated)$_{2-40}$ bisphenol-A di(meth)acrylates, (ethoxylated)$_{3-60}$ glycerol tri(meth)acrylates, (propoxylated)$_{3-60}$ glycerol tri(meth)acrylates, (ethoxylated)$_{3-60}$ trimethylolpropane tri(meth)acrylates, (propoxylated)$_{3-60}$ trimethylolpropane tri(meth)acrylates, (ethoxylated)$_{3-60}$ isocyanurate tri(meth)acrylates, (propoxylated)$_{3-60}$ isocyanurate tri(meth)acrylates, (ethoxylated)$_{4-80}$ pentaerythritol tetra(meth)acrylates, (propoxylated)$_{4-80}$ pentaerythritol tetra(meth)acrylates, (ethoxylated)$_{6-120}$ dipentaerythritol tetra(meth)acrylates, (propoxylated)$_{6-120}$ dipentaerythritol tetra(meth)acrylates, polyurethane acrylates, (meth)acrylate-grafted polybutadienes, or combinations thereof.

In some embodiments, the first ethylenically unsaturated monomer comprises (ethoxylated)$_{2-40}$ bisphenol-A di(meth)acrylates, (propoxylated)$_{2-40}$ bisphenol-A di(meth)acrylates, trimethylolpropane triacrylate (TMPTA), (meth)acrylate-grafted polybutadienes, diallyl phthalate, triallyl isocyanurate, triallyl cyanurate, or combinations thereof.

In some embodiments, the liquid reactive diluent comprises a hydroxyl-functional polyether-modified polysiloxane. The hydroxyl-functional polyether-modified polysiloxane can have the structure:

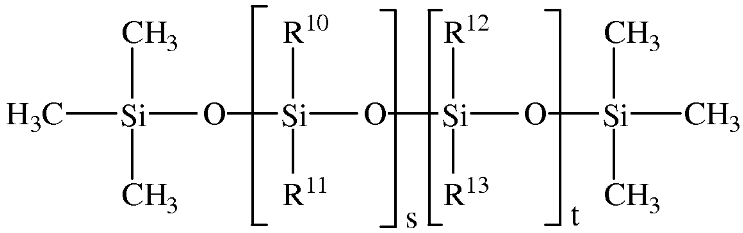

,

wherein $R^{10}$, $R^{11}$, $R^{12}$, and $R^{13}$ are each independently a $C_1$-$C_{12}$ alkyl, aryl, alkaryl, aralkyl, alkoxy, substituted alkyl, substituted aryl, or Q, provided that at least one of $R^{11}$, $R^{12}$, and $R^{13}$ is Q, and s and t are each independently an integer from 1 to 50; and wherein Q has the structure:

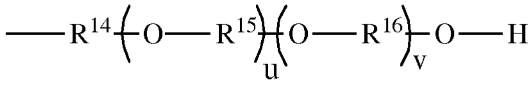

,

wherein $R^{13}$ is a $C_1$-$C_{10}$ alkylene, $R^{14}$ is a $C_2$-$C_{12}$ alkylene, $R^{13}$ is a $C_2$-$C_{20}$ alkylene, and u and v are each independently integers from 1 to 20. The hydroxyl-functional polyether-modified polysiloxane can have a hydroxyl equivalent weight of 100 to 3,000 grams per equivalent, specifically 200 to 2,000 grams per equivalent.

Liquid polyglycols, silicone fluid, hydroxyl-terminated polybutadiene, and combinations thereof, can be minimized or excluded from the non-dusting poly(phenylene ether) particles. In some embodiments, liquid polyglycols are minimized or excluded from the non-dusting poly(phenylene ether) particles. Polyglycols are polyethers comprising oxyalkylene repeat units and 0, 1, or 2 hydroxy groups. The term "oxyalkylene" refers to repeat units having the structure -OR-, wherein R is an alkylene group. For example, the polyoxyalkylene group can comprise oxyethylene groups ($-OCH_2CH_2-$), oxypropylene groups ($-OCH_2CH(CH_3)-$), oxybutylene groups ($-OCH_2CH(CH_2CH_3)-$), or combinations thereof. When at least two different oxyalkylene repeat units are present in the polyglycol, the repeat units can be arranged randomly to form a random polyoxyalkylene copolymer; or in blocks to form a block polyoxyalkylene copolymer. Block polyoxyalkylene copolymers have at least two neighboring polymer blocks, wherein a first polymer block contains at least two of the same oxyalkylene repeat units, and a neighboring block contains at least two other oxyalkylene repeat units. The terminal hydroxyl groups of the polyglycol can be capped with alkyl groups or acyl groups. For example, the polyglycol can comprise an uncapped hydroxyl-terminated polyglycol, a polyglycol monoether, a polyglycol diether, or combinations thereof. The polyglycol can comprise polyethylene glycol, polypropylene glycol, polybutylene glycol, or combinations thereof. The non-dusting poly(phenylene ether) particles can comprise 0 to less than 0.1 part, specifically 0 to less than 0.01 part, more specifically 0 to less than 0.001 part, of polyglycols per 100 parts of poly(phenylene ether) particles. In some embodiments, polyglycols are excluded form the non-dusting poly(phenylene ether) particles.

In some embodiments, mineral oil is minimized or excluded from the non-dusting poly(phenylene ether) particles. Mineral oils are liquid, colorless, odorless mixtures of $C_{15}$-$C_{40}$ hydrocarbons. The mineral oil can comprise a paraffinic oil, comprising n-alkanes, a naphthenic oil, comprising cycloalkanes, or aromatic oils, comprising aromatic hydrocarbons. The non-dusting poly(phenylene ether) particles can comprise 0 to less than 0.1 part, specifically 0 to less than 0.01 part, more specifically 0 to less than 0.001 part, of mineral oil per 100 parts of poly(phenylene ether) particles. In some embodiments, mineral oil is excluded form the non-dusting poly(phenylene ether) particles.

In some embodiments, silicone fluids are minimized or excluded from the non-dusting poly(phenylene ether) particles. Silicone fluids are polysiloxanes having repeat units of the structure:

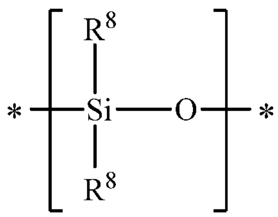

wherein the polysiloxane is end-capped with $-OR^8$ groups, and wherein each $R^8$ is independently a $C_1$-$C_{12}$ hydrocarbyl group. The $C_1$-$C_{12}$ hydrocarbyl group can be, for example, a methyl, butyl, or phenyl group, corresponding to polydimethylsiloxane, polydibutylsiloxane, and polydiphenylsiloxane, respectively. The non-dusting poly(phenylene ether) particles

can comprise 0 to less than 0.1 part, specifically 0 to less than 0.01 part, more specifically 0 to less than 0.001 part, of silicone fluids per 100 parts of poly(phenylene ether) particles. In some embodiments, silicone fluids are excluded form the non-dusting poly(phenylene ether) particles.

In some embodiments, hydroxyl-terminated polybutadiene (HTPB) is minimized or excluded from the composition. Hydroxyl-terminated polybutadienes are available under the trade name POLY BD™ from Cray Valley. An example is POLY BD™ R-45HTLO, having a number average molecular weight of 2800 atomic mass units, and a hydroxyl number of 47,1 milligrams KOH per gram polymer. The non-dusting poly(phenylene ether) particles can comprise 0 to less than 0.1 part, specifically 0 to less than 0.01 part, more specifically 0 to less than 0.001 part, of hydroxyl-terminated polybutadiene, per 100 parts of poly(phenylene ether) particles. In some embodiments, hydroxyl-terminated polybutadiene is excluded form the non-dusting poly(phenylene ether) particles.

The non-dusting poly(phenylene ether) particles can comprise 0 to less than 0.1 part, specifically 0 to less than 0.01 part, more specifically 0 to less than 0.001 part, of liquid polyglycols, silicone fluid, and hydroxyl-terminated polybutadiene combined, per 100 parts poly(phenylene ether) particles. In some embodiments, the non-dusting poly(phenylene ether) particles comprise 0 to less than 0.1 part liquid polyglycols, mineral oil, silicone fluid, and hydroxyl-terminated polybutadiene combined, per 100 parts of poly(phenylene ether) particles. In some embodiments, liquid polyglycols, mineral oil, silicone fluid, and hydroxyl-terminated polybutadiene, are all excluded form the non-dusting poly(phenylene ether) particles.

The non-dusting poly(phenylene ether) particles can be used in various thermoset compositions, for example those comprising polyisocyanates, epoxy resins, or ethylenically unsaturated monomers. The non-dusting poly(phenylene ether) particles can be mixed with components of thermoset compositions that are not reactive with the reactive diluent. For example, in some embodiments, a composition comprises the non-dusting poly(phenylene ether) particles and a second polyol, wherein the liquid reactive diluent comprises a first polyol having at least 2 hydroxyl groups per molecule. In some embodiments, a composition comprises the non-dusting poly(phenylene ether) particles and a polyurethane or polyisocyanurate, wherein the liquid reactive diluent comprises a first polyol having at least 2 hydroxyl groups per molecule. Advantageously, the reactive diluent is reactive with at least one component of a thermoset composition. Thus, in some embodiments, the polyurethane or polyisocyanate comprises the reaction product of a polyisocyanate, a second polyol, and the first polyol. Since it reacts with the polyisocyanate, the reactive diluent will not serve as a impurity that could adversely affect physical properties. Instead it will chemically bond to the polyurethane or polyisocyanurate.

The second polyol can be the same as the first polyol or different. Mixtures of second polyols can be used. The second polyol can comprise a polyether polyol, for example a polyethylene glycol, polypropylene glycol, or a polybutylene glycol, poly(tetramethylene) glycol, a polyester polyol, a polyether block copolymer, a poly(epsilon-caprolactone) polyol, a polycarbonate polyol, polybutadiene polyol, an acrylic polyol, a polysiloxane polyol, an aminic polyol, for example a alkoxylated amine or polyamine, a Mannich polyol, a novolac polyether polyol, a bisphenol A polyol, a resorcinol polyol, a melamine polyol, an aromatic polyester polyol derived from phthalic anhydride, a vegetable oil polyol, a flame retardant polyol, an amidic polyol, a hyperbranched polyol, a dendritic polyol, or combinations thereof. Examples of these classes of polyols can be found in M. Ionescu, ibid.

The polyurethane or polyisocyanurate comprises the reaction product of a polyisocyanate, a second polyol, and the first polyol. The polyisocyanate can comprise 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3-diisocyanate, and cyclohexane-1,4-diisocyanate, 1-isocyanato-2-isocyanatomethyl cyclopentane, 1-isocyanato-3-isocyanatomethyl-3,5,5-trimethyl-cyclohexane, bis(4-isocyanatocyclohexyl)methane, 2,4'-dicyclohexyl-methane diisocyanate, 1,3-bis(isocyanatomethyl)-cyclohexane, 1,4-bis-(isocyanatomethyl)-cyclohexane, bis(4-isocyanato-3-methyl-cyclohexyl)methane, alpha,alpha,alpha',alpha'-tetramethyl-1,3-xylylene diisocyanate, alpha,alpha,alpha',alpha'-tetramethyl-1,4-xylylene diisocyanate, 1-isocyanato-1-methyl-4(3)-isocyanatomethyl cyclohexane, 2,4-hexahydrotoluene diisocyanate, 2,6-hexahydrotoluene diisocyanate, 1,3-phenylene diisocyanate, 1,4-phenylene diisocyanate, 2,4-toluene diisocyanate, 2,6-toluene diisocyanate, 2,4-diphenylmethane diisocyanate, 4,4'-diphenylmethane diisocyanate, 1,5-diisocyanato naphthalene, an oligomeric diphenylmethane diisocyanate having an average of greater than 2 and less than or equal to 4 isocyanate groups per molecule, or combinations thereof. In some embodiments, the isocyanate compound comprises an oligomeric diphenylmethane diisocyanate having an average of greater than 2 and less than or equal to 4 isocyanate groups per molecule.

The polyurethane or polyisocyanurate composition can be a foam.

The non-dusting poly(phenylene ether) particles can be used in epoxy resins. Thus, in some embodiments, a composition comprises the non-dusting poly(phenylene ether) particles and a second epoxy resin, wherein the liquid reactive diluent comprises a first epoxy resin. Epoxy resins can be converted into solid, infusible, and insoluble three-dimensional thermoset networks by reacting with curing agents. Thus, in some embodiments, a composition comprises the non-dusting poly(phenylene ether) particles and a cured epoxy resin, wherein the liquid reactive diluent comprises a first epoxy resin. The curing can be conducted in the presence of a curing catalyst, or accelerator. Advantageously,

the reactive diluent is reactive with curing agents. Thus, in some embodiments, the cured epoxy resin is the reaction product of a curing agent, a second epoxy resin, and the first epoxy resin. Since it reacts with the curing agent, the reactive diluent will not serve as a impurity that could adversely affect physical properties. Instead it will chemically bond to the cured epoxy resin.

The second epoxy resin can be the same as the first epoxy resin or different. Mixtures of second epoxy resins can be used. Examples of second epoxy resins can be found in, H. Q. Pham and M. J. Marks, "Epoxy Resins", in "Ullmann's Encyclopedia of Industrial Chemistry, Wile-VCH Verlag GmbH & Co., Vol. 9, pp. 678-804 (2002). Examples of curing agents and curing catalysts can also be found in this reference.

The non-dusting poly(phenylene ether) particles can be used in thermoset resins comprising ethylenically unsaturated monomers. Thus, in some embodiments, a composition comprises the non-dusting poly(phenylene ether) particles and a second ethylenically unsaturated monomer, wherein the liquid reactive diluent comprises a first ethylenically unsaturated monomer. Ethylenically unsaturated monomers can be converted into solid, infusible, and insoluble three-dimensional networks by curing with curing initiators in the presence of heat, UV light, or electron beam radiation. The curing initiator can be any compound capable of initiating free radical or anionic polymerization. Thus, in some embodiments, a cured composition comprises the non-dusting poly(phenylene ether) particles and a thermoset resin, wherein the liquid reactive diluent comprises a first ethylenically unsaturated monomer, and the thermoset resin comprises a second ethylenically unsaturated monomer. Advantageously, the reactive diluent is co-reactive with the second ethylenically unsaturated monomer. Thus, in some embodiments, the cured composition comprises the reaction product of a second ethylenically unsaturated monomer, and the first ethylenically unsaturated monomer. The cured composition can also comprise the reaction product of an unsaturated polyester resin or a vinyl resin, a second ethylenically unsaturated monomer, and the first ethylenically unsaturated monomer. Since it co-reacts with the second ethylenically unsaturated monomer, the reactive diluent will not serve as a impurity that could adversely affect physical properties. Instead it will chemically bond to the cured composition.

The second ethylenically unsaturated monomer can be the same as the first ethylenically unsaturated monomer or different. Mixtures of second ethylenically unsaturated monomers can be used. The second ethylenically unsaturated monomer can also comprise vinyl toluene, styrene, t-butyl styrene, dibromostyrene, or combinations thereof.

A method of preventing the dusting of poly(phenylene ether) particles having a particle size of 1 to 40 micrometers, comprises combining the poly(phenylene ether) particles and an amount of liquid reactive diluent sufficient to provide non-dusting poly(phenylene ether) particles. In some embodiments, 80 to 96 weight percent of the poly(phenylene ether) particles are combined with 4 to 20 weight percent of the liquid reactive diluent, based on the total weight of the non-dusting poly(phenylene ether) particles. The non-dusting poly(phenylene ether) particles can comprise 0 to less than 0.1 part, specifically 0 to less than 0.01 part, more specifically 0 to less than 0.001 part, of liquid polyglycols, mineral oil, silicone fluid, and hydroxyl-terminated polybutadiene combined, per 100 parts poly(phenylene ether) particles.

Micronized poly(phenylene ether) particles having a mean particle size of 1 to 40 micrometers can have a higher dusting tendency than standard commercial grades of poly(phenylene ether), which have larger mean particle sizes. The dusting of these particles can be prevented by combining the poly(phenylene ether) particles with an amount of liquid reactive diluent sufficient to provide non-dusting poly(phenylene ether) particles. The resulting non-dusting poly(phenylene ether) particles can have significantly reduced fire hazard, deflagration hazard, health hazard, non-uniform blend feeding, and material loss compared to micronized poly(phenylene ether) lacking the anti-dusting agent. Moreover, the reactive diluent can chemically bond with components of thermoset resins. Therefore it will not serve as a impurity that could adversely affect physical properties.

The invention is further illustrated by the following non-limiting examples.

## EXAMPLES

### PREPARATIVE EXAMPLE.

### JET MILLING AND CLASSIFICATION OF POLY(PHENYLENE ETHER)

Poly(2,6-dimethyl-1,4-phenylene ether) (PPE) particles were obtained by jet milling commercial grade poly(phenylene ether). Compressed nitrogen gas was introduced into nozzles of the jet mill to create a supersonic grinding stream. Commercial grade PPE (PPO™ 640) in solid form was injected into this violent, turbulent, rotating nitrogen stream. Particle-on-particle impact collisions in this grinding stream resulted in substantial particle size reductions. Large particles were held in the grinding area by centrifugal force while centripetal force drove finer particles towards the center of the discharge. A sieve of a specific upper size limit was then used to recover particles with a precise size distribution and having diameters below the nominal sieve openings. Larger particles were recycled to the reduction size chamber for further grinding. The PPE particles were classified by passing the jet-milled particles through a screen with 6, 14, or 20 micrometer openings. The resulting classified PPE particles are designated PPE-A, PPE-B, and PPE-C, respectively,

in Table 1. PPE particles of larger particle size was obtained by sieving PPO™ 640 without jet milling. The PPO™ 640 was sized using U.S. Standard No. 200 (75 micrometer openings), No. 100 (150 micrometer openings), and No. 60 (250 micrometer openings). The resulting classified PPE particles are designated PPE-D, PPE-E, and PPE-F, respectively, in Table 1. Characterization of the PPE particles is provided in Table 1. Particle size and shape distribution was determined by dynamic image analysis using the CAMSIZER™ XT from Retsch Technology GmbH operating in air dispersion mode.

Table 1

| PPE | Method | Particle Size[a] (μm) | Stand. Dev. | D(v, 0.9)[b] (μm) | D(v, 0.5)[c] (μm) | D(v, 0.1)[d] (μm) | Aspect Ratio |
|---|---|---|---|---|---|---|---|
| PPE-A | Milling | 6.1 | 2.3 | 8.1 | 5.9 | 4.0 | 0.709 |
| PPE-B | Milling | 10.9 | 4.7 | 17.0 | 10.4 | 5.5 | 0.724 |
| PPE-C | Milling | 15.7 | 5.9 | 23.3 | 15.2 | 8.6 | 0.855 |
| PPE-D | Sieving [e] | 46.7 | 25.3 | 79.2 | 46.6 | 11.2 | 0.755 |
| PPE-E | Sieving[f] | 87.8 | 54.1 | 160.8 | 87.3 | 16.7 | 0.749 |
| PPE-F | Sieving[g] | 264.1 | 97.6 | 377.7 | 275.2 | 122.6 | 0.747 |
| PPE-G | Sieving[h] | 538.8 | 197.9 | 769.6 | 541.5 | 369.5 | 0.759 |

a) Mean particle size volume distribution.
b) D(v,0.1) - 10% of the volume distribution is below this value.
c) D(v,0.5) - 50% of the volume distribution is below this value.
d) D(v,0.9) - 90% of the volume distribution is below this value.
e) U.S. Standard Sieve No. 200 (Sieve opening - 75 μm).
f) U.S. Standard Sieve No. 100 (Sieve opening - 150 μm).
g) U.S. Standard Sieve No. 60 (Sieve opening - 250 μm).
h) U.S. Standard Sieve No. 40 (Sieve opening - 425 μm).

The shape of the PPE particles was examined by Scanning Electronic Microscopy (SEM). Samples were coated with gold and examined using a Carl Zeiss AG - EVO™ 40 Series scanning electron microscope. The conditions were SEM mode, a probe current of 40 picoamps, HV (high vacuum), and an acceleration voltage of 20 kilovolts. There were a great variety of particle shapes, in the PPE particles, which consisted partly of perturbed or irregularly shaped ellipsoidal and spheroidal particles, as viewed under 1,000× magnification by SEM.

The particle size and shape distribution of the poly(2,6-dimethyl-1,4-phenylene ether) particles were determined using the CAMSIZER™ XT from Retsch Technology GmbH operating in air dispersion mode. The particle size is reported as a circular equivalent diameter. Where the 3-dimensional particle is imaged as 2-dimensional particle, the area of 2-dimensional image is converted to a circle with equal area, and the diameter of the circle measured. The aspect ratio is calculated by dividing the breath by the length of the 2-dimensional image.

Particle size measurements were calibrated using a certified NIST traceable highly precise (±0.1 micrometer) standard provided by Retsch Technology. The reference object is an electron beam lithographic pattern that simulates the entire measuring dynamic range of differently sized particles (1-3000 micrometers). The validation of particle size was carried out using a NIST traceable DRI-CAL™ particle size secondary standard. The standard was comprised of polystyrene/divinylbenzene polymeric beads having a mean diameter of 23.2 micrometers ± 0.7 micrometer.

The PPE particles designated "PPE-A" in Table 1, and having a mean particle size of 6.1 micrometers, were used in most of the following examples.

Various liquids and liquid reactive diluents of low volatility were evaluated as anti-dusting agents for poly(phenylene ether) particles. The materials used in the examples are summarized in Table 2.

Table 2

| Component | Description and Supplier |
|---|---|
| PPE-A | Poly(2,6-dimethyl-1,4-phenylene ether), CAS Reg. No. 24938-67-8, having an intrinsic viscosity of 0.4 deciliters per gram, measured in chloroform at 25 °C, and a mean particle size of 6.1 micrometers, 10 volume percent of particles less than 4.0 micrometers, 10 volume percent of particles greater than 8.1 micrometers, and a mean aspect ratio of 0.709:1; obtained by jet milling and classifying PPO™ 640 resin from SABIC Innovative Plastics (0.4 IV PPE). |
| PPE 0.46 | Poly(2,6-dimethyl-1,4-phenylene ether), CAS Reg. No. 24938-67-8, having an intrinsic viscosity of 0.4 deciliters per gram, measured in chloroform at 25 °C; available from SABIC Innovative Plastics as PPO™ 646. |
| MO | White mineral oil, viscosity of 350 cP at 25 °C; available as KAYDOL™ White Mineral Oil from Sonnebom, Inc. |
| POLY-G™ 85-29 | Ethylene oxide capped polyether triol, CAS Reg. No. 9082-00-2, having a hydroxyl number of 28.1 mg KOH/g; and a hydroxyl eq. wt. of 1996.4 g/eq.; available from Arch Chemicals, Inc. |
| POLY-G™ 85-34 | Ethylene oxide capped polyether triol, CAS Reg. No. 9082-00-2, having a hydroxyl number of 35 mg KOH/g, and a hydroxyl eq. wt. of 1602.9 g/eq.; available from Arch Chemicals Inc. |
| POLY-G™ 76-120 | Ethylene oxide capped polyether triol, CAS, Reg. No. 9082-00-2, having a hydroxyl number of 119.3 mg KOH/g, and a hydroxyl eq. wt. of 462.9 g/eq.; available from Arch Chemicals Inc. |
| TEGOSTAB™ B 4690 | Polyether-modified polysiloxane; having a hydroxyl eq. wt. of 1335.7 g/eq.; available from Evonik Industries. |
| HELOXY™ Modifier BD | 1,4-Butanediol diglycidyl ether; available as HELOXY™ Modifier BD from Momentive Specialty Chemicals. |
| OGE | 2-Ethylhexyl glycidyl ether, having a boiling point of 60-62 °C at 0.3 mm mercury; available as catalog number 251747 from Sigma-Aldrich Chemicals Co. |

The preparation of samples for laboratory screening involved two steps - a course (crude) blend followed by blending in a high speed mixer. The course blend was prepared by adding 150 grams of PPE-A to a 500-millimeter beaker and blending the test substance with the PPE-A with a spatula. The course blend was then transferred to a WARING™ explosion-proof blender (Model 36BL54) and further mixed at 10,500 revolutions per minute for about 30 seconds. The resulting blend was transferred to a 1-liter wide mouth jar. Anti-dusting activity was evaluated by noting the extent of the dust cloud formed in the jar. A rating of "dusty" indicates that a substantial dust cloud filling the entire jar was formed; a rating of "no dust" means that no dust cloud was formed; and ratings of "less dusty" and "slightly dusty" indicate intermediate degrees of dusting. Bulk density was estimated by determining the weight of material needed to fill a 100-milliliter graduated cylinder, and is expressed as grams per cubic centimeter.

Flow index is derived from the material compressibility which in turn is derived from the aerated and packed bulk density of the material. It provides a comparative value (dimensionless) for flowability of the powder wherein 100 is best and 0 is worst). Flow index can be calculated from the following equation:

$$F = 0.001 \text{ x } C^3 - 0.0958 \text{ x } C^2 + 0.1396 \text{ x } C + 97.965$$

wherein

F = Flow Index,
C = Compressibility = 100*(PBD-ABD)/PBD,
PBD = packed bulk density, and
ABD = aerated bulk density.

Maximum pressure output, $P_{max}$, psig (bar), maximum pressure rise rate, $dP/dt_{max}$ (psi/sec), deflagration index, $K_{St}$, (bar•m/sec) were measured, and the deflagation class was determined, in accordance with ASTM E1226-10 "Standard Test Method for Explosibility of Dust Clouds". The dust deflagration parameters was measured in a 20-liter chamber. Minimum Ignition Energy (MIE) was measured in accordance with ASTM E2019-03 (2007) "Standard Test Method for Minimum Ignition Energy of a Dust Cloud in Air" using a 1.2-liter Hartmann Chamber made of tempered glass.

COMPARATIVE EXAMPLES 1-7

The effectiveness of white mineral oil (MO) as an anti-dusting agent was evaluated. The results are summarized in Table 3. As can be seen from Table 3, white mineral oil reduces dusting at 1 weight percent, and eliminates dusting at 4 weight percent and higher.

Table 3

| Example Nos. | MO (wt%) | Observations | Density (g/cc) |
|---|---|---|---|
| Comparative Example 1 | 0 | Dusty | 0.233 |
| Comparative Example 2 | 1 | less dusty | 0.238 |
| Comparative Example 3 | 2 | slightly dusty | 0.242 |
| Comparative Example 4 | 4 | no dust | 0.253 |
| Comparative Example 5 | 6 | no dust | 0.257 |
| Comparative Example 6 | 8 | no dust | 0.259 |
| Comparative Example 7 | 10 | no dust | 0.261 |

EXAMPLES 1-15 AND COMPARATIVE EXAMPLES 1-12

The effectiveness of ethylene oxide capped polyether triols as anti-dusting agents was evaluated. The results are summarized in Table 4. As can be seen from Table 4, ethylene oxide capped polyether triols having various hydroxyl equivalent weights are effective anti-dusting agents. Depending on the hydroxyl equivalent weight, dusting was reduced at 1-4 weight percent and is eliminated at 4-6 weight percent up to 12 weight percent of the ethylene oxide capped polyether triols.

Table 4

| Example Nos. | POLY-G™ 85-29 (wt%) | Observations | Density (g/cc) |
|---|---|---|---|
| Comparative Example 1 | 0 | dusty | 0.233 |
| Comparative Example 2 | 1 | dusty | 0.235 |
| Comparative Example 3 | 2 | less dusty | 0.237 |
| Comparative Example 4 | 4 | slight dusty | 0.241 |
| Example 1 | 6 | no dust | 0.246 |
| Example 2 | 8 | no dust | 0.253 |
| Example 3 | 10 | no dust | 0.260 |
| Example 4 | 12 | no dust | - |
| | | | |
| Example Nos. | POLY-G™ 85-34 (wt%) | Observations | Density (g/cc) |
| Comparative Example 1 | 0 | dusty | 0.233 |
| Comparative Example 5 | 1 | dusty | 0.234 |
| Comparative Example 6 | 2 | less dusty | 0.236 |
| Comparative Example 7 | 4 | slightly dusty | 0.240 |
| Example 5 | 6 | no dust | 0.244 |
| Example 6 | 8 | no dust | 0.252 |
| Example 7 | 10 | no dust | 0.259 |
| Example 8 | 12 | no dust | - |
| | | | |

(continued)

| Example Nos. | POLY-G™ 76-120 (wt%) | Observations | Density (g/cc) |
|---|---|---|---|
| Comparative Example 1 | 0 | dusty | 0.233 |
| Comparative Example 8 | 1 | less dusty | 0.236 |
| Comparative Example 9 | 2 | Slightly dusty | 0.240 |
| Example 9 | 4 | no dust | 0.247 |
| Example 10 | 6 | no dust | 0.252 |
| Example 11 | 8 | no dust | 0.258 |
| Example 12 | 10 | no dust | - |
| | | | |
| Example Nos. | POLY-G™ 76-120 (wt%) | Observations | Density (g/cc) |
| Comparative Example 1 | 0 | dusty | 0.233 |
| Comparative Example 10 | 1 | dusty | 0.235 |
| Comparative Example 11 | 2 | dusty | 0.236 |
| Comparative Example 12 | 4 | Slightly dusty | 0.239 |
| Example 13 | 6 | no dust | 0.242 |
| Example 14 | 8 | no dust | 0.253 |
| Example 15 | 10 | no dust | 0.259 |

EXAMPLES 16-18 AND COMPARATIVE EXAMPLES 13-16

The effectiveness of a polyether-modified polysiloxane as an anti-dusting agent was evaluated. The results are summarized in Table 5. As can be seen from Table 5, the polyether-modified polysiloxane is an effective anti-dusting agent at 6 to 10 weight percent.

Table 5

| | TEGOSTAB™ B 4690 (wt%) | Observations | Density (g/cc) |
|---|---|---|---|
| Comparative Example 13 | 0 | dusty | 0.233 |
| Comparative Example 14 | 1 | dusty | 0.235 |
| Comparative Example 15 | 2 | dusty | 0.236 |
| Comparative Example 16 | 4 | slightly dusty | 0.239 |
| Example 16 | 6 | no dust | 0.242 |
| Example 17 | 8 | no dust | 0.253 |
| Example 18 | 10 | no dust | 0.259 |

EXAMPLES 19-20 AND COMPARATIVE EXAMPLES 17-22

The effectiveness of 1,4-butanediol diglycidyl ether as an anti-dusting agent was evaluated. The results are summarized in Table 6. As can be seen from Table 6, 1,4-butanediol diglycidyl ether is an effective anti-dusting agent at 6 to 12 weight percent.

Table 6

| Example Nos. | Modifier BD (wt%) | Observations | Density (g/cc) |
|---|---|---|---|
| Comparative Example 17 | 0 | dusty | 0.233 |

(continued)

| Example Nos. | Modifier BD (wt%) | Observations | Density (g/cc) |
|---|---|---|---|
| Comparative Example 18 | 1 | dusty | 0.234 |
| Comparative Example 19 | 2 | dusty | 0.235 |
| Comparative Example 20 | 4 | dusty | 0.237 |
| Comparative Example 21 | 6 | less dusty | 0.239 |
| Comparative Example 22 | 8 | slightly dusty | 0.242 |
| Example 19 | 10 | no dust | 0.252 |
| Example 20 | 12 | no dust | 0.258 |

EXAMPLES 21-22 AND COMPARATIVE EXAMPLE 23

The effectiveness of 2-ethylhexyl glycidyl ether (OGE) as an anti-dusting agent was evaluated. A Henschel blender, Type FM 10 lbs., was used to prepare the compositions. The first step was to place 1500 grams of PPE-A in a Henschel blender, add the OGE, and mix for a fixed period of time. A Henschel blender is an industrial mixer designed for mixing dry materials at room temperature. In Example 21, the OGE was added in two 30-gram portions, and the blend was mixed for 1.5 minutes at high speed after each addition of OGE. There was minimal caking. In Example 22, the OGE was added in three 60-gram portions. The blend was mixed for 1 minute at high speed after the first two additions of OGE, and for 1.5 minutes after the third addition. Bulk densities and flowability were measured, and the results are summarized in Table 7. BD, ABD, and PBD are bulk density, aerated bulk density, and packed bulk density, respectively. The flow number is a calculated from the ratio of these two bulk densities. As can be seen from Table 7, OGE had a minimal effect on bulk density, aerated bulk density, and packed bulk density. Static charge appeared to decrease with increasing OGE content, and flow decreased in the presence of OGE.

Table 7

| Example | OGE[a] | PPE-A (g) | OGE (g) | BD (g/100 cc) | ABD (g/100 cc) | PBD (g/100 cc) | Flow |
|---|---|---|---|---|---|---|---|
| Comp. Ex. 23 | 0 | 1500 | 0 | 24 | 21.5 | 34.1 | 20 |
| Ex. 21 | 4 | 1500 | 60 | 22.8 | 20.5 | 34.5 | 13 |
| Ex. 22 | 12 | 1500 | 180 | 23.5 | 21.3 | 35.2 | 16 |
| a) Parts per hundred parts PPE-A | | | | | | | |

EXAMPLE 23-24 AND COMPARATIVE EXAMPLE 23

The effectiveness of mineral oil as an anti-dusting agent for micronized PPE was evaluated. A Henschel blender, Type FM 10 lbs., was used to prepare the compositions. The first step was to place 1500 grams of PPE-A in a Henschel blender, add the OGE, and mix for a fixed period of time. A Henschel blender is an industrial mixer designed for mixing dry materials at room temperature. In Example 23, the 30 g of MO was added in a single pour. The blend was mixed for 1.5 minutes at low speed and for 1 minute at high speed. No caking was observed. In Example 28, the 60 g of MO was added in a single pour. The blend was mixed for 15 seconds at high. Caked material was scraped off the middle blade. The blend was mixed for an additional 1.5 minutes at high speed. At this point, there was still about 1 gram of cake on the bottom blade.

As can be seen from Table 8, mineral oil had a minimal effect on bulk density, aerated bulk density, and packed bulk density. Static charge appeared to decrease with increasing mineral oil content, and flow decreased with increasing mineral oil content. The flow of Example 24, having 4 parts OPE, is 38% lower than the flow of Example 21, having 4 parts of MO, respectively. In respect to flowability, OGE is a better anti-dusting agent than mineral oil.

Table 8

| Example | MO[a] | PPE-A (g) | MO (g) | BD (g/100 cc) | ABD (g/100 cc) | PBD (g/100 cc) | Flow Index |
|---|---|---|---|---|---|---|---|
| Comp. Ex. 23 | 0 | 1500 | 0 | 23.8 | 21.5 | 34.1 | 20 |

(continued)

| Example | MO[a] | PPE-A (g) | MO (g) | BD (g/100 cc) | ABD (g/100 cc) | PBD (g/100 cc) | Flow Index |
|---|---|---|---|---|---|---|---|
| Ex. 23 | 2 | 1500 | 30 | 23.9 | 22 | 35.2 | 18 |
| Ex. 24 | 4 | 1500 | 60 | 25.1 | 19 | 33.8 | 8 |
| a) Parts per hundred parts PPE-A | | | | | | | |

All ranges disclosed herein are inclusive of the endpoints, and the endpoints are independently combinable with each other.

The use of the terms "a" and "an" and "the" and similar referents in the context of describing the invention (especially in the context of the following claims) is to be construed to cover both the singular and the plural, unless otherwise indicated herein or clearly contradicted by context. Further, it should further be noted that the terms "first" and "second," herein do not denote any order, quantity, or importance, but are only used to distinguish one element from another. The modifier "about" used in connection with a quantity is inclusive of the stated value and has the meaning dictated by the context (e.g., it includes the degree of error associated with measurement of the particular quantity).

The term, "liquid", as used herein, refers to a material that is a liquid at 23 °C and 1 atmosphere pressure.

The term, "polyol", as used herein, refers to a compound, oligomer, or polymer having on average at least two hydroxyl groups per molecule.

The term, "ethylenically unsaturated monomer", as used herein, refers to a mono-ethylenically unsaturated monomer, a multi-ethylenically unsaturated monomer, or combinations thereof.

The term, "(meth)acrylate", as used herein, refers to acrylate or methacrylate, and the term, "di(meth)acryloyl", as used herein, refers to diacryloyl or dimethacryloyl.

## Claims

**1.** Non-dusting poly(phenylene ether) particles, comprising:

80 to 96 weight percent of poly(phenylene ether) particles having a mean particle size of 1 to 40 micrometers; and 4 to 20 weight percent of a liquid reactive diluent;
wherein all amounts are based on the combined weight of the poly(phenylene ether) particles and the liquid reactive diluent; and
wherein poly(alkenyl aromatic) resins, rubber-modified poly(alkenyl aromatic) resins, and hydrogenated, partially hydrogenated, and non-hydrogenated block copolymers of an alkenyl aromatic monomer and a conjugated diene are all excluded from the non-dusting poly(phenylene ether) particles.

**2.** The non-dusting poly(phenylene ether) particles of claim 1, wherein the liquid reactive diluent comprises a first polyol having 2 to 10 hydroxyl groups per molecule.

**3.** The non-dusting poly(phenylene ether) particles of claim 1 or 2, wherein the liquid reactive diluent comprises an ethylene oxide capped polyether triol having a hydroxyl equivalent weight of 100 to 3,000 grams per equivalent.

**4.** The non-dusting poly(phenylene ether) particles of claim 1, wherein the liquid reactive diluent comprises a glycidyl ether group.

**5.** The non-dusting poly(phenylene ether) particles of claim 1, wherein the liquid reactive diluent comprises a first ethylenically unsaturated monomer.

**6.** The non-dusting poly(phenylene ether) particles of claim 1, wherein the liquid reactive diluent comprises a hydroxyl-functional polyether-modified polysiloxane.

**7.** A composition comprising the non-dusting poly(phenylene ether) particles of any of claims 1-3 and a second polyol, wherein the liquid reactive diluent comprises a first polyol having at least 2 hydroxyl groups per molecule.

**8.** A composition comprising the non-dusting poly(phenylene ether) particles of claim 1 and a polyurethane or polyisocyanurate, wherein the liquid reactive diluent comprises a first polyol having at least 2 hydroxyl groups per molecule.

**9.** A composition comprising the non-dusting poly(phenylene ether) particles of claim 1 and a second epoxy resin, wherein the liquid reactive diluent comprises a first epoxy resin.

**10.** A composition comprising the non-dusting poly(phenylene ether) particles of claim 1 and a cured epoxy resin, wherein the reactive diluent comprises a first epoxy resin.

**11.** A composition comprising the non-dusting poly(phenylene ether) particles of claim 1 and a second ethylenically unsaturated monomer, wherein the reactive diluent comprises a first ethylenically unsaturated monomer.

**12.** A cured composition comprising the non-dusting poly(phenylene ether) particles of claim 1 and a thermoset resin, wherein the liquid reactive diluent comprises a first ethylenically unsaturated monomer, and the thermoset resin comprises a second ethylenically unsaturated monomer.

**13.** A method of preventing the dusting of poly(phenylene ether) particles having a particle size of 1 to 40 micrometers, comprising combining the poly(phenylene ether) particles and an amount of liquid reactive diluent sufficient to provide non-dusting poly(phenylene ether) particles, wherein 80 to 96 weight percent of the poly(phenylene ether) particles are combined with 4 to 20 weight percent of the liquid reactive diluent, based on the total weight of the non-dusting poly(phenylene ether) particles.

**14.** The method of claim 13, wherein the non-dusting poly(phenylene ether) particles comprise 0 to 0.1 weight percent of liquid polyglycols, mineral oil, silicone fluid, and hydroxyl-terminated polybutadiene combined, per 100 parts poly(phenylene ether) particles.

## Patentansprüche

**1.** Nichtstaubende Poly(phenylenether)-Teilchen, umfassend:

80 bis 96 Gewichtsprozent Poly(phenylenether)-Teilchen mit einer mittleren Teilchengröße von 1 bis 40 Mikrometern; und
4 bis 20 Gewichtsprozent eines flüssigen reaktiven Verdünnungsmittels;
wobei sich alle Mengen auf das kombinierte Gewicht der Poly(phenylenether)-Teilchen und des flüssigen reaktiven Verdünnungsmittels beziehen; und
wobei poly(alkenylaromatische) Harze, kautschukmodifizierte poly(alkenylaromatische) Harze und hydrierte, teilweise hydrierte und nicht-hydrierte Block-Copolymere eines alkenylaromatischen Monomers und eines konjugierten Diens alle von den nichtstaubenden Poly(phenylenether)-Teilchen ausgeschlossen sind.

**2.** Nichtstaubende Poly(phenylenether)-Teilchen nach Anspruch 1, wobei das flüssige reaktive Verdünnungsmittel ein erstes Polyol mit 2 bis 10 Hydroxylgruppen pro Molekül umfasst.

**3.** Nichtstaubende Poly(phenylenether)-Teilchen nach Anspruch 1 oder 2, wobei das flüssige reaktive Verdünnungsmittel ein Ethylenoxid-gekapptes Polyethertriol mit einem Hydroxyl-Äquivalentgewicht von 100 bis 3.000 Gramm pro Äquivalent umfasst.

**4.** Nichtstaubende Poly(phenylenether)-Teilchen nach Anspruch 1, wobei das flüssige reaktive Verdünnungsmittel eine Glycidylethergruppe umfasst.

**5.** Nichtstaubende Poly(phenylenether)-Teilchen nach Anspruch 1, wobei das flüssige reaktive Verdünnungsmittel ein erstes ethylenisch ungesättigtes Monomer umfasst.

**6.** Nichtstaubende Poly(phenylenether)-Teilchen nach Anspruch 1, wobei das flüssige reaktive Verdünnungsmittel ein hydroxyl-funktionelles Polyether-modifiziertes Polysiloxan umfasst.

**7.** Zusammensetzung, umfassend die nichtstaubenden Poly(phenylenether)-Teilchen nach irgendeinem der Ansprüche 1 bis 3 und ein zweites Polyol, wobei das flüssige reaktive Verdünnungsmittel ein erstes Polyol mit mindestens 2 Hydroxylgruppen pro Molekül umfasst.

**8.** Zusammensetzung, umfassend die nichtstaubenden Poly(phenylenether)-Teilchen nach Anspruch 1 und ein Polyurethan oder Polyisocyanurat, wobei das flüssige reaktive Verdünnungsmittel ein erstes Polyol mit mindestens 2 Hydroxylgruppen pro Molekül umfasst.

**9.** Zusammensetzung, umfassend die nichtstaubenden Poly(phenylenether)-Teilchen nach Anspruch 1 und ein zweites Epoxidharz, wobei das flüssige reaktive Verdünnungsmittel ein erstes Epoxidharz umfasst.

**10.** Zusammensetzung, umfassend die nichtstaubenden Poly(phenylenether)-Teilchen nach Anspruch 1 und ein gehärtetes Epoxidharz, wobei das reaktive Verdünnungsmittel ein erstes Epoxidharz umfasst.

**11.** Zusammensetzung, umfassend die nichtstaubenden Poly(phenylenether)-Teilchen nach Anspruch 1 und ein zweites ethylenisch ungesättigtes Monomer, wobei das reaktive Verdünnungsmittel ein erstes ethylenisch ungesättigtes Monomer umfasst.

**12.** Gehärtete Zusammensetzung, umfassend die nichtstaubenden Poly(phenylenether)-Teilchen nach Anspruch 1 und ein duroplastisches Harz, wobei das flüssige reaktive Verdünnungsmittel ein erstes ethylenisch ungesättigtes Monomer und das duroplastische Harz ein zweites ethylenisch ungesättigtes Monomer umfasst.

**13.** Verfahren zum Verhindern des Staubens von Poly(phenylenether)-Teilchen mit einer Teilchengröße von 1 bis 40 Mikrometern, umfassend Kombinieren der Poly(phenylenether)-Teilchen und einer Menge an flüssigem reaktivem Verdünnungsmittel, die ausreicht, um nichtstaubende Poly(phenylenether)-Teilchen bereitzustellen, wobei 80 bis 96 Gewichtsprozent der Poly(phenylenether)-Teilchen mit 4 bis 20 Gewichtsprozent des flüssigen reaktiven Verdünnungsmittels kombiniert werden, bezogen auf das Gesamtgewicht der nichtstaubenden Poly(phenylenether)-Teilchen.

**14.** Verfahren nach Anspruch 13, wobei die nichtstaubenden Poly(phenylenether)-Teilchen 0 bis 0,1 Gewichtsprozent flüssige Polyglykole, Mineralöl, Silikonfluid und hydroxylterminiertes Polybutadien kombiniert, pro 100 Teile Poly(phenylenether)-Teilchen, umfassen.

## Revendications

**1.** Particules de poly(phénylène éther) sans poussière, comprenant :

80 à 96 pourcents en poids de particules de poly(phénylène éther) ayant une granulométrie moyenne de 1 à 40 micromètres ; et
4 à 20 pourcents en poids d'un diluant réactif liquide ; dans lesquelles toutes les quantités sont rapportées au poids combiné des particules de poly(phénylène éther) et du diluant réactif liquide ; et
dans lesquelles sont exclues des particules de poly(phénylène éther) sans poussière les résines poly(alcénylaromatiques), les résines poly(alcénylaromatiques) de caoutchouc modifié et les copolymères à blocs hydrogénés, partiellement hydrogénés ou non hydrogénés d'un monomère alcénylaromatique et d'un diène conjugué.

**2.** Particules de poly(phénylène éther) sans poussière selon la revendication 1, dans lesquelles le diluant réactif liquide comprend un premier polyol ayant 2 à 10 groupes hydroxyle par molécule.

**3.** Particules de poly(phénylène éther) sans poussière selon la revendication 1 ou 2, dans lesquelles le diluant réactif liquide comprend un polyéthertriol coiffé par de l'oxyde d'éthylène, ayant une masse équivalente d'hydroxyle de 100 à 3000 grammes par équivalent.

**4.** Particules de poly(phénylène éther) sans poussière selon la revendication 1, dans lesquelles le diluant réactif liquide comprend un groupe glycidyléther.

**5.** Particules de poly(phénylène éther) sans poussière selon la revendication 1, dans lesquelles le diluant réactif liquide comprend un premier monomère à insaturation éthylénique.

**6.** Particules de poly(phénylène éther) sans poussière selon la revendication 1, dans lesquelles le diluant réactif liquide comprend un polysiloxane modifié par un polyéther à fonctionnalité hydroxyle.

**7.** Composition comprenant les particules de poly(phénylène éther) sans poussière de l'une des revendications 1 à 3

et un deuxième polyol, dans laquelle le diluant réactif liquide comprend un premier polyol ayant au moins 2 groupes hydroxyle par molécule.

**8.** Composition comprenant les particules de poly(phénylène éther) sans poussière de la revendication 1 et un polyuréthanne ou un polyisocyanate, dans laquelle le diluant réactif liquide comprend un premier polyol ayant au moins 2 groupes hydroxyle par molécule.

**9.** Composition comprenant les particules de poly(phénylène éther) sans poussière de la revendication 1 et une deuxième résine époxy, dans laquelle le diluant réactif liquide comprend une première résine époxy.

**10.** Composition comprenant les particules de poly(phénylène éther) sans poussière de la revendication 1 et une résine époxy durcie, dans laquelle le diluant réactif comprend une première résine époxy.

**11.** Composition comprenant les particules de poly(phénylène éther) sans poussière de la revendication 1 et un deuxième monomère à insaturation éthylénique, dans laquelle le diluant réactif comprend un premier monomère à insaturation éthylénique.

**12.** Composition durcie comprenant les particules de poly(phénylène éther) sans poussière de la revendication 1 et une résine thermodurcissable, dans laquelle le diluant réactif liquide comprend un premier monomère à insaturation éthylénique et la résine thermodurcissable comprend un deuxième monomère à insaturation éthylénique.

**13.** Procédé pour empêcher la formation de poussière par des particules de poly(phénylène éther) ayant une granulométrie de 1 à 40 micromètres, comprenant la combinaison des particules de poly(phénylène éther) et d'une quantité d'un diluant réactif liquide suffisante pour fournir des particules de poly(phénylène éther) sans poussière, dans lequel 80 à 96 pourcents en poids des particules de poly(phénylène éther) sont combinées à 4 à 20 pourcents en poids du diluant réactif liquide, par rapport au poids total des particules de poly(phénylène éther) sans poussière.

**14.** Procédé selon la revendication 13, dans lequel les particules de poly(phénylène éther) sans poussière comprennent 0 à 0,1 pourcent en poids de polyglycols liquides, d'une huile minérale, d'un fluide de silicone et d'un polybutadiène à terminaison hydroxyle combinés pour 100 parties des particules de poly(phénylène éther).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20140005340 A1
- US 20140100312 A1
- US 3306874 A, Hay


### Non-patent literature cited in the description


- Epoxy Resins. **H. Q. PHAM ; M. J. MARKS.** Ullmann's Encyclopedia of Industrial Chemistry. Wile-VCH Verlag GmbH & Co, 2002, vol. 9, 678-804
- *CHEMICAL ABSTRACTS,* 24938-67-8
- *CHEMICAL ABSTRACTS,* 9082-00-2
- Standard Test Method for Explosibility of Dust Clouds. *ASTM E1226-10*
- Standard Test Method for Minimum Ignition Energy of a Dust Cloud in Air. *ASTM E2019-03,* 2007